# EUROPÄISCHE PATENTANMELDUNG

(11) **EP 4 501 598 A1**
(43) Veröffentlichungstag der Anmeldung: **05.02.2025**
(21) Anmeldenummer: 23189129.2
(22) Anmeldetag: 02.08.2023
(51) Int. Cl.: B29C 65/20, B29C 65/78, B29C 65/00

(54) **VARIABLER SCHWEISSABSTAND**

(71) Anmelder: Georg Fischer Rohrleitungssysteme AG, 8201 Schaffhausen (CH)
(72) Erfinder: Hasific, Edin, 8200 Schaffhausen (CH); Gutierrez, Mariano, 8280 Kreuzlingen (CH); Engesser, Benedikt, 78073 Hochemmingen (DE); Waldraff, Thomas, 78073 Bad Duerrheim (DE); Rösch, Jürgen, 79853 Lenzkirch (DE)
(74) Vertreter: Fenner, Seraina

(57) **Zusammenfassung**

Halbschale zur Aufnahme und konzentrischen Führung eines Kunststoffrohres in einer Stumpfschweissmaschine, wobei die Halbschale eine halbkreisringförmige Form mit einem dem Aussendurchmessers des aufzunehmenden Rohrs entsprechenden Innendurchmesser, mindestens einem Aussendurchmesser zur passgenauen Aufnahme in einer Spanneinheit einer Stumpfschweissmaschine, eine Stirnseite, eine Rückseite und eine zwischen der Stirnseite und der Rückseite axial erstreckende Dicke, aufweist, wobei mindestens ein Abstandselement an der Stirnseite angeordnet ist und in axialer Richtung die Stirnseite überragt.

## Beschreibung

Die Erfindung betrifft eine Halbschale zur Aufnahme und konzentrischen Führung eines Kunststoffrohres in einer Stumpfschweissmaschine vorzugsweise in einer IR-Stumpfschweissmaschine, wobei die Halbschale eine halbkreisringförmige Form mit einem dem Aussendurchmessers des aufzunehmenden Rohrs entsprechenden Innendurchmesser, mindestens einem Aussendurchmesser zur passgenauen Aufnahme in einer Spanneinheit einer Stumpfschweissmaschine, eine Stirnseite, eine Rückseite und eine zwischen der Stirnseite und der Rückseite axial erstreckende Dicke, aufweist.

Halbschalen zur Rohraufnahme in Stumpfschweissmaschinen sind bekannt und sind jeweils immer auf den entsprechenden Aussendurchmesser des Rohres in die Spannstelle einzusetzen.

Die JP 2014240169A2 offenbart solche Halbschalen die mehrteilig aufgebaut sind und in die Spannstelle zur Rohraufnahme eingesetzt werden, wodurch das Rohr in der Schweissmaschine radial und axial fixiert ist.

Nachteilig hierbei ist, dass trotz des Einsatzes von unterschiedlichen Halbschalen für die unterschiedlichen Rohrdimensionen der Abstand zum Heizelement immer derselbe ist, da dieser meist über einen axialen Anschlag am Heizelement definiert ist.

In der EP 0 453 903 A2 sind die Anschläge als jeweils vier zylindrische Nocken an beiden Seiten des Heizelements offenbart. Diese Nocken gewährleisten den Abstand vom Heizelement zur Spanneinheit bzw. zum zu erwärmenden Rohrende.

Wie bereits oben erwähnt ist dieser Abstand unveränderbar und somit bei jedem Rohr unabhängig vom Rohrdurchmesser und somit bei jeder Schweissung unabhängig von Dimension und Material gleich gross.

Es ist Aufgabe der Erfindung den Abstand sowie Schweissparameter zur Erwärmung des Rohres in einer Stumpfschweissmaschine individuell auf die zu verschweissenden Rohre abstimmen zu können damit die Rohrenden optimal und möglichst energieeffizient erwärmt werden.

Diese Aufgabe wird erfindungsgemäss dadurch gelöst, dass an der Halbschale zur Aufnahme und konzentrischen Führung eines Kunststoffrohres mindestens ein Abstandselement an der Stirnseite angeordnet ist und in axialer Richtung die Stirnseite überragt.

Die erfindungsgemässe Halbschale zur Aufnahme und konzentrischen Führung eines Kunststoffrohres in einer Stumpfschweissmaschine, vorzugsweise in einer IR-Stumpfschweissmaschine weist eine halbkreisringförmige Form mit einem dem Aussendurchmessers des aufzunehmenden Rohrs entsprechenden Innendurchmesser auf. Die Halbschale weist mindestens einen Aussendurchmesser zur passgenauen Aufnahme in einer Spanneinheit einer Stumpfschweissmaschine auf. Die Halbschale beinhaltet eine Stirnseite, eine Rückseite und eine zwischen der Stirnseite und der Rückseite axial erstreckende Dicke. Die Halbschale ist vorzugsweise dementsprechend als Scheibe mit unterschiedlichen Durchmessern und Dicken und einem Grundriss als Halbkreisring ausgebildet.

Die Halbschale weist mindestens ein Abstandselement auf, das an der Stirnseite der Halbschale angeordnet ist und in axialer Richtung die Stirnseite überragt. Das Abstandselement erhebt sich vorzugsweise aus der Stirnseite der Halbschale heraus und die Anschlagfläche des Abstandselements liegt axial vor der Stirnseite der Halbschale bzw. ist der Rückseite abgewandt angeordnet. Das Abstandselement ist vorzugsweise an der Stirnseite der Halbschale angeordnet und erstreckt sich in entgegengengesetzte Richtung zur Rückseite bzw. weg von der Rückseite.

Durch dieses Abstandselement an der Halbschale wird jeder Abstand zum Heizelement in der Stumpfschweissmaschine entsprechend des Rohrdurchmessers oder auch spezifisch auf ein Material definiert. Somit weist die Halbschale nicht nur einen rohrdimensionsspezifischen Innendurchmesser auf, sondern auch ein rohrdimensions- und ev. auch ein rohrmaterialspezifisches Abstandselement, das den Heizabstand zum Heizelement definiert und regelt entsprechend dem eingespannten Rohr. Zudem wird dadurch auch die am Rohrende vorherrschende Temperatur aufgrund der durch das Abstandselement generierten Distanz zum Heizelement definiert. Selbstverständlich ist es auch möglich, dass die Stumpfschweissmaschine aufgrund der Erkennung des Abstands, der durch das Abstandselement an der Halbschale generiert wird, die in der Steuerung entsprechend des Abstands hinterlegten Schweissparameter auswählt bzw. vorsieht.

Es hat sich als vorteilhaft gezeigt, wenn die Halbschale im Bereich des Abstandselements in axialer Richtung dicker ausgebildet ist als die Dicke der Halbschale zwischen der Stirnseite und der Rückseite. Dies gewährleistet, dass das Abstandselement axial über die Stirnseite hinausragt und beim Erwärmen der Rohrenden mittels Heizelement der Schweissmaschine das Heizelement axial durch das Abstandselement der Halbschale, die in der Spanneinheit eingesetzt ist, vom Rohrende beabstandet wird.

Es ist vorteilhaft, wenn die Dicke zwischen Rückseite und Anschlagfläche des Anschlagelements, welche der Stirnseite abgewandt ist, dicker ist als die Dicke zwischen der Rückseite und der Stirnseite.

Vorzugsweise ist eine axiale Anschlagschulter zur axialen Positionierung und Fixierung der Halbschale in einer Spanneinheit einer Stumpfschweissmaschine an der Halbschale angeordnet. Es ist vorteilhaft, wenn diese Anschlagschulter durch in axiale Richtung hintereinander angeordnete, unterschiedliche Aussendurchmesser gebildet wird, wodurch ein Versatz am Aussendurchmesser der Halbschale vorliegt. Durch den an der Halbschale angeordneten Versatz entsteht eine axial begrenzende Anschlagschulter, die das Verschieben der Halbschale in der Spanneinheit zumindest in einer Richtung unterbindet.

Eine bevorzugte Ausführungsform besteht darin, dass das Abstandselement derart an der Halbschale angeordnet ist, dass die Halbschale, platziert in einer Spanneinheit, axial zumindest in eine Richtung begrenzt ist. Dies wird vorzugsweise dadurch erreicht, dass das Abstandselement die Stirnseite radial überragt. Das heisst, das Abstandselement ragt über den Aussendurchmesser der Stirnseite hinaus, wodurch die Halbschale sich nicht in Richtung Rückseite verschieben kann.

Es ist vorteilhaft, wenn das Abstandselement als herausragende Lasche ausgebildet ist. Vorzugsweise ist das Abstandselement einteilig bzw. einstückig an der Halbschale angeordnet bzw. die Halbschale ist als ein homogenes Teil ausgebildet. Das Abstandselement ist vorzugsweise integral an der der Halbschale angeordnet.

Als vorteilhaft hat sich gezeigt, wenn mindestens zwei Abstandselemente an der Halbschale angeordnet sind. Vorzugsweise sind sie entlang des Halbkreisringes regelmässig beabstandet angeordnet.

Als vorteilhaft hat sich gezeigt, wenn die Halbschale zur Erkennung durch die Stumpfschweissmaschine eine Codierung aufweist. Dies hat den Vorteil, dass die Stumpfschweissmaschine entsprechend der Codierung alle hinterlegten Einstellungen und Parameter autonom einstellen kann, die auf das zu verschweissende Rohr zutreffen und dadurch die Fehlerquote bei Verschweissungen die bisher aufgrund manueller Fehleingaben entstanden sind, vermieden werden können.

Vorzugsweise erfolgt die Codierung elektronisch oder mechanisch. Das heisst, die Codierung kann mittels an unterschiedlichen Positionen an der Halbschale angebrachte Aussparungen, Erhöhung oder Magneten wie auch durch unterschiedliche Materialstärken erfolgen, welche dann mittels eines in der Spanneinheit oder Schweissmaschine angeordneten Sensors erkannt werden. Die Codierung kann ebenso durch einen in der Halbschale platzierten RFID-Chip oder eine NFC-Tag erfolgen, wie auch das Anbringen eines QR- oder Strichcodes kann dazu dienen, dass die Halbschale von der Schweissmaschine erkannt wird um entsprechend die benötigten Schweissparameter autonom einzustellen.

Als vorteilhaft hat sich gezeigt, wenn die Halbschale aus einem metallischen Werkstoff oder aus Kunststoff ist.

Vorzugsweise ist die Halbschale aus Aluminium ausgebildet.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Halbschale von vorne,
- Fig. 2: eine dreidimensionale Ansicht einer erfindungsgemässen Halbschale von hinten,
- Fig. 3: eine Schnittansicht durch eine erfindungsgemässe Halbschale und
- Fig. 4: eine schematische Darstellung von in Spanneinheiten eingebauter erfindungsgemässer Halbeschalen mit dazwischen angeordnetem Heizelement.

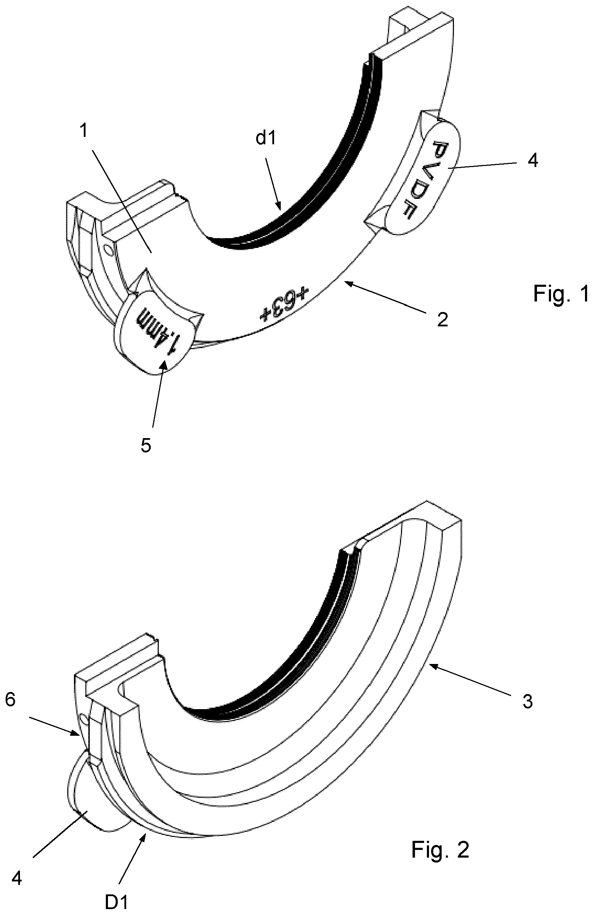

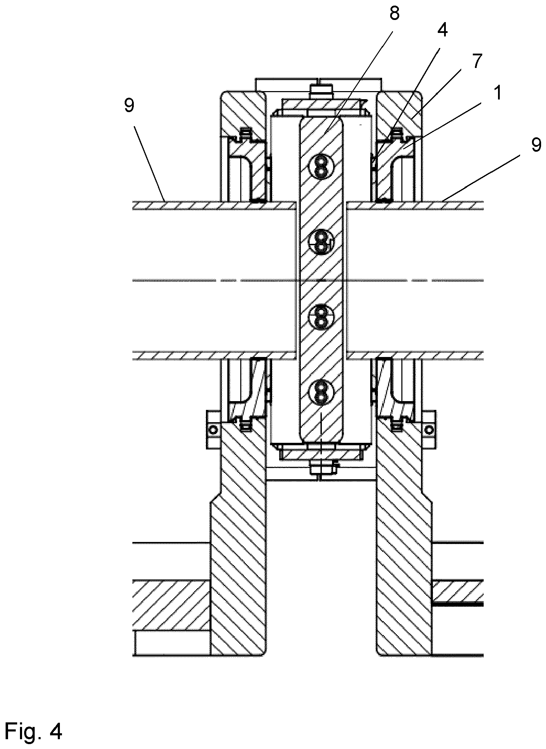

Die in Fig. 1 dargestellte Zeichnung zeigt eine erfindungsgemässe Halbschale 1 zur Aufnahme und konzentrischen Führung eines Kunststoffrohres 9 in einer Stumpfschweissmaschine, ersichtlich in Fig. 4. Die Halbschale 1 weist eine halbkreisringförmige Form auf, die einen Innendurchmesser d1 aufweist, der dem Aussendurchmesser des zu verschweissenden Kunststoffrohrs 9 entspricht. Die Halbschale 1 weist einen Aussendurchmesser D1 auf, um passgenau in einer Spanneinheit 7 einer Stumpfschweissmaschine aufgenommen zu werden. Dazu werden in jeder Spanneinheit 7 zwei identische Halbschalen 1 sich gegenüberliegend eingebaut, die das Kunststoffrohr 9 umschliessen. Die Halbschale 1 weist eine Stirnseite 2 auf, die im eingebauten Zustand in einer Spanneinheit 7 in Richtung des Heizelements 8 gerichtet ist. Die Rückseite 3 der Halbschale 1 liegt auf der gegenüberliegenden Seite der Stirnseite 2. Zwischen der Stirnseite 2 und der Rückseite 3 der Halbschale 1 erstreckt sich axial die Dicke B1 der Halbschale 1. Die Halbschale 1 weist vorzugsweise unterschiedliche Abstufungen in den Innen- und Aussendurchmessern auf. Die Halbschale 1 weist an der Stirnseite 2 mindestens ein Abstandselement 4 auf, das in axialer Richtung die Stirnseite 2 überragt. Das Abstandselement 4 befindet sich im eingebauten Zustand der Halbschale 1 zwischen dem Heizelement 8 und der Stirnseite 2 der Halbschale 1 bzw. der Spanneinheit 7 mit der es integral verbunden ist bzw. das Abstandselement 4 und die Halbschale 1 bilden zusammen ein Teil. Gut ersichtlich ist diese Anordnung des Abstandselements 4 zwischen Heizelement 8 und Halbschale 1 in Fig. 4, wobei das Abstandselement 4 den dem Rohr 9 entsprechend definierten Abstand zur Erwärmung bildet. Das heisst, dass entsprechend des Aussendurchmessers des Rohres 9 eine Halbschale 1 ausgewählt wird die den entsprechenden Innendurchmesser d1 aufweist und gleichzeitig ein entsprechend dickes Abstandselement 4 um den benötigten Abstand zwischen Heizelement 8 und der Halbschale 1 bzw. der Spanneinheit 7 zu gewährleisten. Zudem kann das Material wie auch die Wandstärke des zu verschweissenden Rohres 9 ebenfalls einen Einfluss auf die Dicke des Abstandselements 4 haben, wodurch in einem Sortiment Halbschalen 1 mit identischen Innendurchmessern d1 aber unterschiedlichen Dicken des Abstandselements 4 vorliegen können und somit unterschiedliche Dicken B2 zwischen Anschlagfläche 5 des Abstandselements 4 und der Rückseite 3.

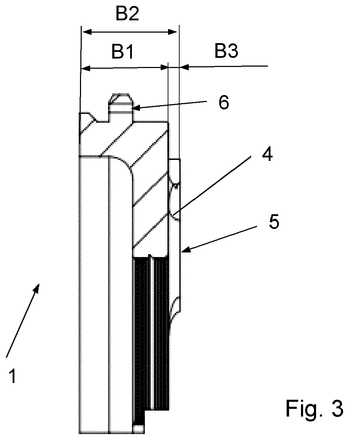

Vorzugsweise weist die Halbschale 1 zwei Abstandselemente 4 auf, die entlang der Stirnseite 2 regelmässig verteilt angeordnet sind. Selbstverständlich ist auch eine andere Anzahl denkbar. In Fig. 3 ist gut ersichtlich, dass die Dicke B1 der Halbschale zwischen Stirnseite 2 und Rückseite 3 geringer ist, als die Dicke B2 zwischen Rückseite 3 und der Anschlagfläche 5 des Abstandselements 4. Damit die Halbschale 1 in der Spanneinheit 7 axial positioniert und fixiert ist, weist die Halbschale 1 eine Anschlagschulter 6 auf, die das axiale Verschieben der Halbschale 1 zumindest in eine Richtung unterbindet. Vorzugsweise wird die Anschlagschulter 6 durch Abstufungen in den Aussendurchmessern D1 gebildet. Die Abstandselemente 4 sind vorzugsweise als Laschen ausgebildet und ragen radial über den Aussendurchmesser D1 hinaus. Dadurch kann sich die Halbschale 1 zumindest in eine Richtung nicht verschieben. Vorzugsweise wird durch die Anschlagschulter 6 und die Lasche die Halbschale 1 axial in beide Richtungen fixiert. Zur Erkennung der Halbschale 1 durch die Schweissmaschine sind Codierungen an der Halbschale angebracht und werden durch einen Sensor in der Schweissmaschine bzw. Spanneinheit 7 erkannt. Die Codierungen können mechanisch und/oder elektronisch sein, ist in den Figuren nicht erkennbar. Selbstverständlich kann die Codierung auch darin bestehen, dass die Schweissmaschine die Dicke B3 des Abstandselements 4 oder auch die Dicke B2 zwischen Anschlagfläche 5 des Abstandselements 4 und der Rückseite 3 erkennt.

### Bezugszeichenliste

- 1: Halbschale
- 2: Stirnseite
- 3: Rückseite
- 4: Abstandselement
- 5: Anschlagfläche Abstandselement
- 6: Anschlagschulter
- 7: Spanneinheit
- 8: Heizelement
- 9: Rohr

- d1: Innendurchmesser

- D1: Aussendurchmesser

- B1: Dicke der Halbschale zwischen Stirnseite und Rückseite
- B2: Dicke der Halbschale zwischen Anschlagfläche des Abstandselements und der Rückseite
- B3: Dicke des Abstandselements

## Patentansprüche

1. Halbschale (1) zur Aufnahme und konzentrischen Führung eines Kunststoffrohres (9) in einer Stumpfschweissmaschine, wobei die Halbschale (1) eine halbkreisringförmige Form mit einem dem Aussendurchmessers des aufzunehmenden Rohrs entsprechenden Innendurchmesser (d1), mindestens einem Aussendurchmesser (D1) zur passgenauen Aufnahme in einer Spanneinheit (7) einer Stumpfschweissmaschine, eine Stirnseite (2), eine Rückseite (3) und eine zwischen der Stirnseite (2) und der Rückseite (3) axial erstreckende Dicke (B1), aufweist, **dadurch gekennzeichnet, dass** mindestens ein Abstandselement (4) an der Stirnseite (2) angeordnet ist und in axialer Richtung die Stirnseite (2) überragt.

2. Halbschale (1) nach Anspruch 1, **dadurch gekennzeichnet, dass** die Halbschale (1) im Bereich des Abstandselements (4) in axialer Richtung dicker ausgebildet ist als die Dicke (B1) der Halbschale zwischen der Stirnseite (2) und der Rückseite (3).

3. Halbschale (1) nach einem der Ansprüche 1 oder 2, **dadurch gekennzeichnet, dass** eine axiale Anschlagschulter (6) zur axialen Positionierung und Fixierung der Halbschale (1) in einer Spanneinheit einer Stumpfschweissmaschine an der Halbschale (1) angeordnet.

4. Halbschale (1) nach einem der Ansprüche 1 bis 3, **dadurch gekennzeichnet, dass** das Abstandselement (4) derart an der Halbschale (1) angeordnet ist, dass die Halbschale (1), angeordnet in einer Spanneinheit, axial zumindest in eine Richtung begrenzt ist.

5. Halbschale (1) nach einem der Ansprüche 1 bis 4, **dadurch gekennzeichnet, dass** mindestens zwei Abstandselemente (4) an der Halbschale (1) angeordnet sind.

6. Halbschale (1) nach einem der Ansprüche 1 bis 5, **dadurch gekennzeichnet, dass** das Abstandselement (4) als Lasche ausgebildet ist.

7. Halbschale (1) nach einem der Ansprüche 1 bis 6, **dadurch gekennzeichnet, dass** das Abstandselement (4) den Aussendurchmesser (D1) radial überragen.

8. Halbschale (1) nach einem der Ansprüche 1 bis 7, **dadurch gekennzeichnet, dass** zur Erkennung der Halbschale (1) durch eine Stumpfschweissmaschine die Halbschale (1) eine Codierung aufweist.

9. Halbschale (1) nach Anspruch 8, **dadurch gekennzeichnet, dass** die Codierung elektronisch und/oder mechanisch ist.

10. Halbschale (1) nach einem der Ansprüche 1 bis 9, **dadurch gekennzeichnet, dass** die Halbschale (1) aus einem metallischen Werkstoff oder aus Kunststoff ist.

11. Halbschale (1) nach einem der Ansprüche 1 bis 10, **dadurch gekennzeichnet, dass** die Halbschale (1) aus Aluminium ist.
